# EUROPEAN PATENT SPECIFICATION

(11) **EP 0 468 722 B1**
(45) Date of publication and mention of the grant of the patent: **23.08.1995**
(21) Application number: 91306653.6
(22) Date of filing: 22.07.1991
(51) Int. Cl.: F02F 7/00, C22C 37/08

(54) **Ceramic-metal insert composite**
Einsatz aus Keramik und Metall
Insert en céramique et métal

(30) Priority: 23.07.1990 JP 194453/90
(43) Date of publication of application: 29.01.1992
(73) Proprietor: NGK INSULATORS, LTD., Nagoya City Aichi Pref. (JP)
(72) Inventor: Suzuki, Katsumi, Handa-city, Aichi Pref. (JP); Ozawa, Tadao, Atsuta-ku, Nagoya City, Aichi Pref. 456 (JP); Gouji, Shosaku, Nagoya City, Aichi Pref. 451 (JP)
(74) Representative: Paget, Hugh Charles Edward

(56) References cited:
- EP-A- 0 224 345
- EP-A- 0 232 028
- WORLD PATENT INDEX, FILE SUPPLIER, Abstract AN=87-274522, Derwent Publications Ltd., London, GB & JP-A-62191607 (NGK INSULATORS KK) 22-8-87
- WORLD PATENT INDEX, FILE SUPPLIER, Abstract AN=89-110102, Derwent Publications Ltd., London, GB & JP-A-1055364 (NIPPON CHUZO KK) 2-3-89
- WORLD PATENT INDEX, FILE SUPPLIER, Abstract AN=88-253280, Derwent Publications Ltd., London, GB & JP-A-63183151 (TOSHIBA KK)
- Metals Handbook, Ninth Edition, 1980, Vol 3, "Low expansion alloys", Fig 3. page 7

## Description

### BACKGROUND OF THE INVENTION

### Field of the Invention

The present invention relates to a metal-ceramic insert composite, more particularly, it relates to a metal-ceramic insert composite which has large jointing strength between the ceramic and metal even at a high temperature and has large strength reliability even at a low temperature, which causes a low degree of stress in the ceramic and which can be produced by a simple process at a low cost.

### Description of Related Art

In recent years, machine structural parts have been researched and developed using the properties of ceramics, that is, excellent resistance to heat and abrasion, lightness, thermal insulation and so on. However, since most ceramic materials are more brittle than metals, in many cases, machine structural parts cannot be easily produced by using ceramic materials alone. It is therefore known that ceramics are used in the form of a composite with a metal.

However, since most ceramic materials having the above-described excellent characteristics have coefficients of thermal expansion which are lower than those of usual metal materials for machine structures, metal-ceramic composites have had the problem of decreasing the bonding strength between a metal and ceramic in a part used at various temperatures, particularly at high temperatures, and the problem of producing a gap between the metal and ceramic at a high temperature. Conversely, if an attempt is made to obtain sufficient holding strength at a high temperature, there is the problem that the ceramic is broken due to the occurrence of excessive stress therein.

In order to solve these problems, a method has been proposed in which a low-thermal-expansion metal such as titanium, having a thermal expansion coefficient close to that of ceramics, is interposed as an intermediate layer between a ceramic insert and a metal such as cast iron or an aluminum alloy. However, since such an intermediate layer member must be bonded to the ceramic by shrink fitting, press fitting, brazing or the like, the method has the problem of increased cost because of the need for many processing steps, i.e. machining, brazing and so on.

Another method has been proposed in which ceramic wool, a low-density calcined ceramic layer or a low-rigidity material such as copper is used as the intermediate layer. However, this method has the problem that sufficient strength cannot be obtained.

Particularly, in moving parts which are required to be lightweight, although it is effective from the viewpoint of lower weight to use an aluminum alloy as a metal material, the problem caused by the difference between the thermal expansion coefficients of the ceramic and metal becomes more serious than in cases using an iron material because an aluminum alloy has a higher thermal expansion coefficient than the iron material.

Furthermore, EP-A-0 224 345 describes a ceramic-metal composite comprising a ceramic body and a low-expansion cast ferrous alloy secured thereto by insert casting.

### SUMMARY OF THE INVENTION

Accordingly, it is an object of the present invention to solve the above problems of conventional machine parts and provide a metal-ceramic insert composite with sufficient strength which may cause small stress in the ceramic at room temperature and which may be produced by a small number of processes at a low cost without machining the junction between the ceramic and metal.

The present invention provides a metal-ceramic insert composite comprising a ceramic insert and a low-expansion cast iron according to claim 1.

The present invention also provides a method of making a metal-ceramic composite according to claim 6.

Preferably, the metal-ceramic insert composite of the invention further comprises an aluminum alloy secured by insert casting to the low-expansion cast ferrous alloy.

It is preferred that in the composite of the present invention, the ceramic is used only for parts where heat. load is large ( e.g., in a piston at the lip portion at the opening of a combustion chamber and the center of it).

### BRIEF DESCRIPTION OF THE DRAWINGS

Fig. 1 is a schematic sectional view of a metal-ceramic insert composite in according with an embodiment of the present invention;
Fig. 2 is a schematic sectional view of an example of the insert method for the embodiment shown in Fig. 1; and
Figs. 3 to 8 are respectively schematic sectional views of metal-ceramic insert composites in accordance with other embodiments of the present invention.

### DETAILED DESCRIPTION OF THE INVENTION

The present invention is described in detail below.

A metal-ceramic insert composite according to the present invention has a composite structure comprising a low-expansion cast ferrous alloy which preferably has a thermal expansion coefficient within the range of 3.5 x 10̸⁻⁶/°C to 5.5 x 10̸⁻⁶/°C at room temperature to 40̸0̸°C and which is bonded to a ceramic insert.

The low-expansion cast ferrous alloy that is used in the present invention has a composition consisting essentially by weight of 0̸.3 to 2.0̸% C, 25 to 32% Ni, 12 to 20̸% Co, 0̸.3 to 2.0̸% Si, 0̸.2 to 0̸.8% Nb, 0̸.0̸1 to 0̸.2% Mg or Ca, 1.0̸% or less Mn, and Fe and impurities as the remainder.

One reason for the use of cast ferrous alloy having the above composition is that such cast iron shows a level of overall shrinkage which is lower than that of low-thermal-expansion alloys such as Invar alloys and Kovar when the temperature is decreased to room temperature because solidification shrinkage is decreased due to the separation of graphite (density: about 2 g/cm³) from a liquid metal (density: about 8 g/cm³) during solidification. Another reason is that metals other than low-expansion cast ferrous alloy having the above composition do not have the preferred characteristics of the low-expansion cast ferrous alloy which has a thermal expansion coefficient closer to that of ceramics than general iron materials.

The term "ceramics" means silicon nitride, sialons, silicon carbide, alumina, aluminum titanate and the like, all of which have strength necessary for mechanical structural members and have the properties of resistance to heat, thermal shock and abrasion, lightness, thermal insulation and the like which are more excellent than metals.

In the present invention, with regard to the relationship between the thickness of a ceramic member and the thickness of the low-expansion cast ferrous alloy, the average thickness of the ceramic member is preferably larger than the average thickness of the cast iron. The reason for the preferred relationship between the thickness is that, although a low-expansion cast ferrous alloy is used, its average thermal expansion coefficient is still larger than the thermal expansion coefficient of ceramics in a wide temperature range. Therefore, stress occurs in the ceramic member due to the difference in the thermal expansion coefficients between the ceramic and the metal during cooling after forming the composite, and, if the thickness of the ceramic member is too small, the stress increases excessively and causes the breakage of the ceramic member. For the same reason, it is more preferred to understand the stress occurring in the ceramic and cast ferrous members by FEM analysis or the like and to design a composite so that the stress is sufficiently small.

When the low-expansion cast ferrous alloy is poured into a mold containing the ceramic to be inserted, it is preferred that the temperature difference between the ceramic and the metal melt is decreased by preheating the ceramic member taking into account the thermal-shock-resistance temperature of the ceramic member so that the ceramic member is not broken by thermal shock during pouring of the metal. For this reason, the ceramic member is preferably preheated to about 60̸0̸°C or more, more preferably about 80̸0̸°C or more. During preheating of the ceramic member, it is preferred from the viewpoints of work efficiency and prevention of cooling of the ceramic that the ceramic is preheated together with a mold in which the ceramic is set. It is also preferred to use a ceramic mold having resistance to high temperature.

In addition, during inserting, it is preferred for improving the adhesion between the ceramic and cast ferrous alloy to apply pressure to the molten metal or decrease the pressure in the mold by suction immediately after the molten metal has been poured into the mold. After casting, the casting is gradually cooled in an annealing furnace and, particularly, it is effective for removing stress from the casting to hold it at 40̸0̸°C to 60̸0̸°C for a long time. If the casting is rapidly cooled, breakage or separation of the ceramic occurs due to the stress caused by the difference in thermal expansion.

It is also preferred form the viewpoint of decreasing the weight of the part that the metal portion of the metal-ceramic composite comprises as possible of a material such as an aluminum alloy, which has a high ratio of strength to weight. In a preferred structure, therefore, an aluminum alloy or the like is further cast in the mold so as to be bonded to the outside of the low-expansion cast ferrous alloy which in turn is bonded to the ceramic.

When an aluminum alloy is cast in the mold so as to be bonded to the outside of the low-expansion cast ferrous alloy, a surface treatment, such as alfin treatment or alumelt treatment, of the low-expansion ferrous alloy is effective for chemically bonding the aluminum alloy to the ferrous alloy and realizing a strong bonding therebetween without producing any gap at the boundary.

When an aluminum alloy is cast in the mold so as to be bonded to the composite of ceramic and low-expansion cast ferrous alloy, pressure casting is preferably performed at a gas pressure or hydraulic pressure of 2 to 50̸ kg/cm² to prevent the occurrence of a shrinkage cavity or the like.

Although the present invention is further described in detail below with reference to the embodiments shown in the drawings, the invention is not limited to these embodiments.

### Embodiment 1

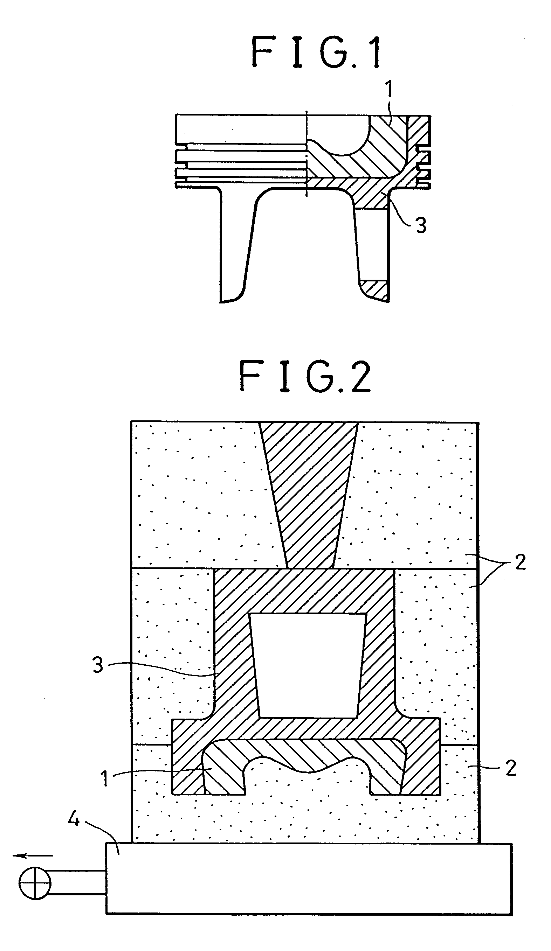

Fig. 1 shows an embodiment in which the metal-ceramic insert composite of the present invention is applied to the crown portion of a two-piece piston of a direct injection diesel engine.

As shown in Fig. 1, the cavity 1 of a piston combustion chamber comprises a thick member made of silicon nitride having high heat-transfer resistance per weight. The low-expansion cast ferrous alloy 3 which forms the piston body is bonded to the cavity 1 so that heat loss of the combustion gas in the combustion chamber through the wall thereof can be decreased. In addition, the heat resistance of the opening of the combustion chamber is improved for preventing troubles occurring at the opening such as burning and cracking, which are problems in metal pistons.

Such a structure permits the formation of a part causing small stress in the ceramic over the entire range of temperatures at which the part is used, and having high bond strength between the metal and ceramic and high strength reliability.

Fig. 2 shows the insert method employed in manufacturing the embodiment shown in Fig. 1.

The piston cavity member 1 which is made of silicon nitride and has an as-fired outer surface not subjected to machining was set in a ceramic mold 2 and then heated together with the ceramic mold 2. After heating to about 90̸0̸°C, molten low-expansion cast ferrous alloy 3 of 140̸0̸°C having a chemical composition consisting by weight of 1.2% C, 1.2% Si, 0̸.3% or less Mn, 28% Ni, 14% Co, 0̸.0̸3% Mg and 0̸.3% Nb was poured into the mold 2. At this time, the pressure in the mold 2 was reduced by suction through a lower chamber 4 in order to improve the adhesion between the silicon nitride piston cavity member 1 and the alloy 3. After the temperature of the molten metal decreased to about 80̸0̸°C, the mold 2 was placed in an electric furnace. After slow cooling to room temperature, the composite obtained was separated from the mold 2, and the outer periphery of the low-expansion cast alloy was then subjected to machine working.

### Embodiment 2

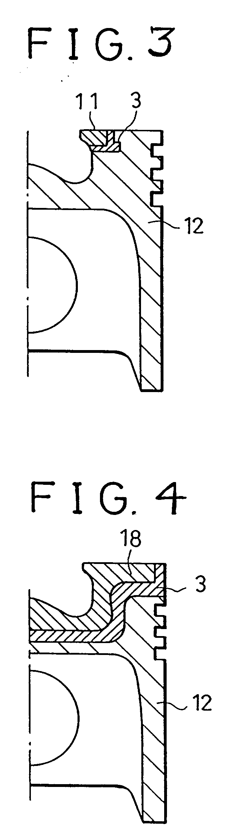

Fig. 3 shows an embodiment in which the metal-ceramic insert composite of the present invention is applied to the piston of a small direct-injection diesel engine.

In the embodiment, a lip portion 11 provided at the opening of a piston combustion chamber was formed by using silicon nitride having excellent heat resistance in order to prevent the occurrence of burning, cracking and the like in the lip portion 11, which are problems in a metal piston. In addition, the piston body 12 was made of a light aluminum alloy in order to take a measure against local heat load and minimize an increase in the total weight of the part.

A composite ring member comprising the silicon nitride ring (lip portion) 11 and low-expansion cast iron 3 was produced by the same method as that employed in Embodiment 1. The surface of the low-expansion cast ferrous alloy 3 was then subjected to alumelt treatment. The thus-obtained composite ring member was then set in a metal mold and preheated. A molten aluminum alloy at about 60̸0̸ to 70̸0̸°C was then poured into the mold. In this case, pressurized casting was performed at about 5 kg/cm² in order to prevent the occurrence of a shrinkage cavity. After the mold had been slowly cooled to room temperature, the product was separated from the mold, and the outer periphery was subjected to machine working, and a piston ring groove and a piston pin hole were formed to obtain the piston.

### Embodiment 3

Fig. 4 shows an embodiment in which a metal-ceramic insert composite of the present invention comprising silicon nitride, low-expansion cast ferrous alloy and an aluminum alloy was produced by the same method as that employed in Embodiment 2. In this embodiment, silicon nitride having excellent heat resistance and thermal insulation was used for improving the heat resistance of the upper portion of a piston and decreasing heat loss. The upper portion of a piston 12 made of an aluminum alloy was inserted with silicon nitride 18. This was used as the piston of a small direct-injection diesel engine.

### Embodiments 4-6

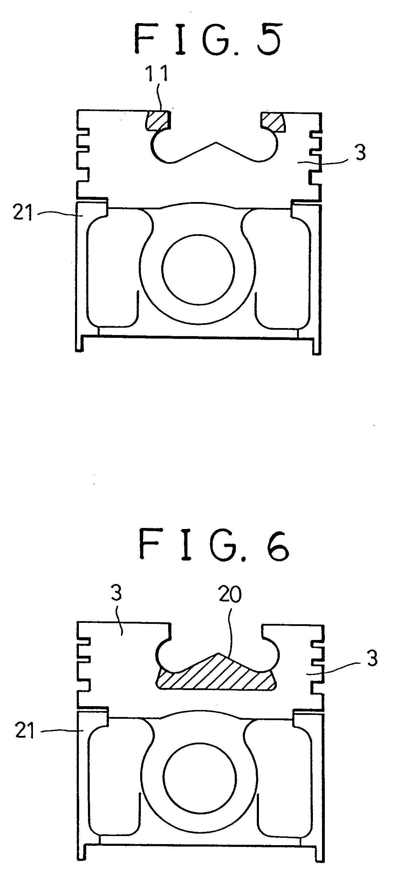

Figs. 5 to 7 each show an embodiment in which a metal-ceramic insert composite of the present invention is applied to a two-piece piston of a direct injection diesel engine, ceramics being used only for parts where the heat load is large.

In Fig. 5, a lip portion 11 provided at the opening of a piston combustion chamber is formed using silicon nitride having excellent heat resistance, the outer side of the lip portion comprises a low-expansion cast ferrous alloy member 3. The numeral 21 indicates a skirt portion made of aluminum.

Fig. 6 shows an embodiment in which silicon nitride having excellent heat resistance and thermal insulation is used for a relatively large part 20̸ which occupies the whole bottom portion including the center of the piston combustion chamber. In this structure, the occurrence of melt and cracks from heat load can be prevented and, furthermore, the increased heat insulation of the combustion chamber leads to increasing of the temperature of gas in the combustion chamber. Reduced fuel expenses and purification of exhaust fumes thus can be realized.

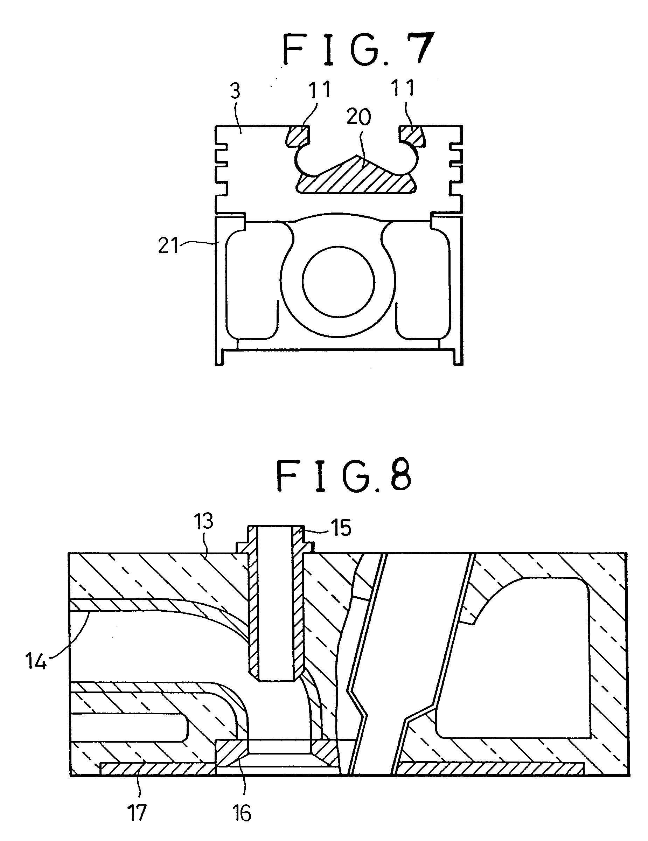

Fig. 7 shows an embodiment combining the embodiment of Fig. 5 with that of Fig. 6, where the measures against heat load are more effective and heat insulation of the combustion chamber is larger than the embodiment in Fig. 5 or 6. It has been impossible by conventional methods such as shrink fitting to provide a combustion chamber comprising plural ceramic members like the embodiment shown in Fig. 7. However, the present invention makes it possible to use ceramics separately, destruction of the ceramic members being prevented.

### Embodiment 7

Fig. 8 shows an embodiment which employs a metal-ceramic insert composite of the present invention. In this embodiment, the inner side of the exhaust port 14 provided in the cylinder head body 13 of a diesel engine was made of a tubular aluminum titanate member, and a valve guide 15 was made of a silicon nitride member. In addition, a value sheet 16 was made of silicon nitride, and a cylinder head plate 17 serving as a fire-contact surface was made of a silicon nitride disc-shaped member. This structure was designed for decreasing heat loss of the exhaust port, abrasion of the valve guide 15 and valve sheet 16, and heat loss of the fire-contact surface. The body 13 is insert case of a low-expansion cast ferrous alloy described for other embodiments.

As described above, the metal-ceramic insert composite of the present invention causes small stress in a ceramic at the room temperature and can be produced by a simple process at a low cost because machining of the bond portion between the ceramic and metal is not required. The metal-ceramic composite obtained has sufficient bonding strength between the ceramic and metal even at high temperatures.

In addition, the present invention provides a metal-ceramic composite structure which facilitates the use of ceramics having low reliability due to their brittleness as mechanical structural members. Since the invention thus enables the practical use of mechanical structural members which are formed by employing the characteristics of ceramics such as the heat resistance, abrasion resistance, light weight and thermal insulation, this invention is very useful in the industrial feild.

## Claims

1. A ceramic-metal composite comprising a ceramic body (1,6,11,14,18,20) and a low-expansion cast ferrous alloy (3,13) secured thereto by insert casting,
characterized in that said low-expansion cast ferrous alloy has a composition consisting essentially by weight of 0.3 to 2.0% C, 25 to 32% Ni, 12 to 20% Co, 0.3 to 2.0% Si, 0.2 to 0.8% Nb, 0.01 to 0.2% Mg or Ca, 1.0% or less Mn, remainder Fe and unavoidable impurities and having a thermal expansion coefficient in the range of 3.5 x 10⁻⁶/°C to 5.5 x 10⁻⁶/°C from room temperature to 400°C.

2. A ceramic-metal composite according to claim 1, further comprising an aluminum alloy (12) secured by insert casting to said low-expansion cast ferrous alloy.

3. A ceramic-metal composite according to claim 1 or claim 2 wherein the average thickness of said ceramic body is larger than the average thickness of said cast ferrous alloy.

4. A ceramic-metal composite according to any one of claims 1 to 3 which is a piston.

5. A ceramic-metal composite according to claim 4, wherein the ceramic body provides at least one of a lip portion at the opening of a combustion chamber and the center of the combustion chamber.

6. A method of producing a metal-ceramic insert composite comprising a ceramic insert (1,6,11,15,16,18,20) secured to a low-expansion cast ferrous alloy (3) by insert casting, comprising the steps of arranging the ceramic insert (1,6,11,15,16,18,20) in a mold (2) and casting the molten low expansion ferrous alloy (3) around the ceramic insert, characterised in that said low-expansion cast ferrous alloy has a composition consisting essentially by weight of 0.3 to 2.0% C, 25 to 32% Ni, 12 to 20% Co, 0.3 to 2.0% Si, 0.2 to 0.8% Nb, 0.01 to 0.2% Mg or Ca, 1.0% or less Mn, remainder Fe and unavoidable impurities and having a thermal expansion coefficient in the range of 3.5 x 10⁻⁶/°C to 5.5 x 10⁻⁶/°C from room temperature to 400°C.

7. A method according to claim 6 wherein pressure is applied to said ferrous alloy after it is cast into the mold by evacuating the mold (2) and/or by applying pressure to the alloy.

8. A method according to claim 6 or claim 7 comprising the further step of bonding an aluminium alloy insert (12, 21) to the low-expansion cast ferrous alloy (3).

9. A method according to claim 8 wherein the thermal expansion coefficient of the low expansion cast ferrous alloy (3) is greater than that of the ceramic insert (1,6,11,15,16,18,20).

## Patentansprüche

1. Verbundkörper aus Keramik und Metall, umfassend einen Keramikkörper (1, 6, 11, 14, 18, 20) und eine Gußlegierung auf Eisenbasis (3, 13) mit niedriger Ausdehnung, die durch Einsatzgießen daran befestigt ist,
dadurch gekennzeichnet, daß die Gußlegierung auf Eisenbasis mit niedriger Ausdehnung eine Zusammensetzung aufweist, die im wesentlichen (in Gew.-%) aus 0,3 bis 2,0% C, 25 bis 32% Ni, 12 bis 20% Co, 0,3 bis 2,0% Si, 0,2 bis 0,8% Nb, 0,01 bis 0,2% Mg, oder Ca, höchstens 1,0% Mn, sowie Fe und unvermeidlichen Verunreinigungen als Rest, besteht und einen Wärmeausdehnungskoeffizienten im Bereich von 3,5 x 10⁻⁶/°C bis 5,5 x 10⁻⁶/°C von Raumtemperatur bis 400⁰C besitzt.

2. Verbundkörper aus Keramik und Metall nach Anspruch 1, weiters umfassend eine Aluminiumlegierung (12), die durch Einsatzgießen an die Gußlegierung auf Eisenbasis mit niedriger Ausdehnung befestigt ist.

3. Verbundkörper aus Keramik und Metall nach Anspruch 1 oder 2, worin die durchschnittliche Dicke des Keramikkörpers größer als die durchschnittliche Dicke der Gußlegierung auf Eisenbasis ist.

4. Verbundkörper aus Keramik und Metall nach einem der Ansprüche 1 bis 3, der ein Kolben ist.

5. Verbundkörper aus Keramik und Metall nach Anspruch 4, worin der Keramikkörper zumindest einen, ausgewählt aus einem Lippenabschnitt an der Öffnung einer Verbrennungskammer und einem Abschnitt im Zentrum der Verbrennungskammer, bildet.

6. Verfahren zur Herstellung eines Einsatzverbundkörpers aus Keramik und Metall, umfassend einen Keramikeinsatz (1, 6, 11, 15, 16, 18, 20), der durch Einsatzgießen an einer Gußlegierung auf Eisenbasis (3) mit niedriger Ausdehnung befestigt wird, umfassend die Schritte des Anordnens des Keramikeinsatzes (1, 6, 11, 15, 16, 18, 20) in einer Form (2) und das Gießen der geschmolzenen Eisenlegierung (3) mit niedriger Ausdehnung um den Keramikeinsatz herum, dadurch gekennzeichnet, daß die Gußlegierung auf Eisenbasis mit niedriger Ausdehnung eine Zusammensetzung aufweist, die (in Gew.-%) im wesentlichen aus 0,3 bis 2,0% C, 25 bis 32% Ni, 12 bis 20% Co, 0,3 bis 2,0% Si, 0,2 bis 0,8% Nb, 0,01 bis 0,2% Mg oder Ca, höchstens 1,0% Mn, und aus Fe und unvermeidlichen Verunreinigungen als Rest, besteht und einen Wärmeausdehnungskoeffizienten im Bereich von 3,5 x 10⁻⁶/°C bis 5,5 x 10⁻⁶/°C von Raumtemperatur bis 400°C besitzt.

7. Verfahren nach Anspruch 6, worin Druck auf die Gußlegierung auf Eisenbasis ausgeübt wird, nachdem sie in die Form gegossen worden ist, indem die Form (2) evakuiert wird und/oder Druck auf die Legierung ausgeübt wird.

8. Verfahren nach Anspruch 6 oder 7, umfassend den weiteren Schritt des Bindens eines Aluminiumlegierungs-Einsatzes (12, 21) an die Gußlegierung auf Eisenbasis (3) mit niedriger Ausdehnung.

9. Verfahren nach Anspruch 8, worin der Wärmeausdehnungskoeffizient der Gußlegierung auf Eisenbasis (3) mit niedriger Ausdehnung größer als jener des Keramikeinsatzes (1, 6, 11, 15, 16, 18, 20) ist.

## Revendications

1. Composite en céramique et métal comprenant un corps en céramique (1, 6, 11, 14, 18, 20) et un alliage ferreux coulé, à faible dilatation (3, 13) fixé sur celui-ci par coulage par insert,
caractérisé en ce que ledit alliage ferreux coulé, à faible dilatation, a une composition consistant essentiellement en poids en 0,3 à 2,0% de C, 25 à 32% de Ni, 12 à 20% de Co, 0,3 à 2,0% de Si, 0,2 à 0,8% de Nb, 0,01 à 0,2% de Mg ou Ca, 1,0% ou moins de Mn, le restant en Fe et impuretés inévitables et ayant un coefficient de dilatation thermique dans l'intervalle de 3,5 x 10⁻⁶/°C à 5,5 x 10⁻⁶/°C de la température ambiante à 400°C.

2. Composite en céramique et métal selon la revendication 1, comprenant de plus un alliage d'aluminium (12) fixé par coulage par insert audit alliage ferreux à faible dilatation.

3. Composite en céramique et métal selon la revendication 1 ou la revendication 2 dans lequel l'épaisseur moyenne dudit corps en céramique est plus grande que l'épaisseur moyenne dudit alliage ferreux coulé.

4. Composite en céramique et métal selon l'une quelconque des revendications 1 à 3 qui est un piston.

5. Composite en céramique et métal selon la revendication 4, dans lequel le corps en céramique fournit au moins l'un d'une portion de lèvre à l'ouverture d'une chambre de combustion et du centre de la chambre à combustion.

6. Méthode de production d'un insert composite en céramique et métal comprenant un insert en céramique (1, 6, 11, 15, 16, 18, 20) fixé à un alliage ferreux coulé, à faible dilatation (3) par coulage par insert, comprenant les étapes d'arranger l'insert en céramique (1, 6, 11, 15, 16, 18, 20) dans un moule (2) et de couler l'alliage ferreux, à faible dilatation, fondu (3) autour de l'insert en céramique, caractérisée en ce que ledit alliage ferreux coulé, à faible dilatation, a une composition consistant essentiellement en poids en 0,3 à 2,0% de C, 25 à 32% de Ni, 12 à 20% de Co, 0,3 à 2,0% de Si, 0,2 à 0,8% de Nb, 0,01 à 0,2% de Mg ou de Ca, 1,0% ou moins de Mn, le restant en Fe et impuretés inévitables et ayant un coefficient de dilatation thermique dans l'intervalle de 3,5 x 10⁻⁶/°C à 5,5 x 10⁻⁶/°C de la température ambiante à 400°C.

7. Méthode selon la revendication 6 dans laquelle une pression est appliquée audit alliage ferreux après qu'il a été coulé dans le moule en évacuant le moule (2) et/ou en appliquant une pression à l'alliage.

8. Méthode selon la revendication 6 ou la revendication 7 comprenant l'étape supplémentaire de joindre un insert d'alliage d'aluminium (12, 21) à l'alliage ferreux coulé à faible dilatation (3).

9. Méthode selon la revendication 8 dans laquelle le coefficient de dilatation thermique de l'alliage ferreux coulé, à faible dilatation (3) est supérieur à celui de l'insert en céramique (1, 6, 11, 15, 16, 18, 20).
